# EUROPÄISCHE PATENTANMELDUNG

(11) **EP 4 741 299 A2**
(43) Veröffentlichungstag der Anmeldung: **13.05.2026**
(21) Anmeldenummer: 25212567.9
(22) Anmeldetag: 31.10.2025
(51) Int. Cl.: B65B 31/04, B65B 7/02, B32B 27/08, B65B 51/14, B65B 25/00

(54) **VERFAHREN UND VORRICHTUNG ZUM VERPACKEN VON GEGENSTÄNDEN UND VERWENDUNG EINER FOLIE FÜR DIESES VERFAHREN**

(30) Priorität: 12.11.2024 DE 102024133055
(71) Anmelder: Kallfass, Jens, 72622 Nürtingen (DE)
(72) Erfinder: Kallfass, Jens, 72622 Nürtingen (DE)
(74) Vertreter: Patentanwälte Ruff, Wilhelm, Beier, Dauster & Partner mbB

(57) **Zusammenfassung**

Bei einem Verfahren zum Verpacken eines Gegenstands in eine Barrierefolie wird ein Träger samt dem Gegenstand darauf vollständig in die Barrierefolie eingehüllt. Dabei kann entweder ein Unterdruck in dem Folienbeutel erzeugt und dann der Folienbeutel mit Unterdruck darin verschlossen werden. Alternativ dazu kann der fertige Folienbeutel ein an der Barrierefolie angebrachtes Überdruckventil oder ein Entlüftungsloch aufweisen. Der Folienbeutel wird mittels thermischen Verschweißens von mindestens zwei aufeinanderliegenden Lagen der Barrierefolie verschlossen, wobei der Folienbeutel eng an dem Träger mit dem Gegenstand darauf anliegen kann. Die Barrierefolie ist zweilagig mit einer dünnen Lage EVOH-Folie dazwischen, um recyclingfähig zu sein.

## Beschreibung

### Anwendungsgebiet und Stand der Technik

Die Erfindung betrifft ein Verfahren zum Verpacken eines Gegenstands in eine Folie oder mit einer Folie, wobei der Gegenstand auf einem Träger liegt und dieser Träger mit dem Gegenstand dann in die Folie eingehüllt wird. Des Weiteren betrifft die Erfindung eine Verwendung einer sogenannten Barrierefolie zum Verpacken eines Gegenstands auf einem Träger gemäß diesem Verfahren. Schließlich betrifft die Erfindung auch eine Vorrichtung, mit der das erfindungsgemäße Verfahren durchgeführt werden kann.

Es ist bekannt, beispielsweise Lebensmittel als Gegenstände direkt und nur in Folie zu verpacken. Ebenso ist es bekannt, Lebensmittel als Gegenstände auf einen Träger, beispielsweise aus Pappe oder als mehrlagiger Kunststoff-Tray, aufzulegen, wobei der Träger oben einen umlaufenden breiten Rand aufweist. Auf diesem Rand wird dann eine mehrlagige Folie zum Verschließen aufgeklebt oder aufgeschweißt. Zu diesem Zweck ist diese Folie derart ausgebildet, dass sie von außen nach innen an das zu verpackende Lebensmittel keine Keime, Bakterien oder zu viel Sauerstoff gelangen lässt. Des Weiteren sind diese Folien teilweise relativ dick, damit die genannte Verbindungsart mit dem Rand des Trägers dauerhaft und stabil erfolgt. Nachteilig an dieser Mehrlagigkeit ist, dass das Material nicht recyclingfähig ist. Ein Deckel kann aus dem Material LDPE/EVOH/PP mit einer Stärke von 55 µm bestehen, ein Träger aus dem Material PET oder LDPE.

Des Weiteren sind beispielsweise aus der EP 3 530 457 A1 sogenannte EVOH-Schrumpffolien bekannt, die auch sogenannte Barriere-Folien sein können. Auch sie können zum Verpacken von auf Trägern liegenden Lebensmitteln verwendet werden. Nach dem Verpacken bzw. Verschließen einer Verpackung können sie auf bekannte Art und Weise thermisch geschrumpft werden.

### Aufgabe und Lösung

Der Erfindung liegt die Aufgabe zugrunde, ein eingangs genanntes Verfahren, eine entsprechende Verwendung sowie eine entsprechende Vorrichtung zu schaffen, mit denen Probleme des Standes der Technik gelöst werden können und es insbesondere möglich ist, Lebensmittel als Gegenstände auf einem Träger sicher, haltbar und möglichst keimfrei bzw. möglichst gut verpacken zu können, wobei vorzugsweise die Verpackung möglichst vollständig recyclingfähig ist, wobei ein Träger möglicherweise kompostierfähig ist.

Gelöst wird diese Aufgabe durch ein Verfahren mit den Merkmalen des Anspruchs 1, durch eine Verwendung mit den Merkmalen des Anspruchs 15 sowie durch eine Vorrichtung mit den Merkmalen des Anspruchs 16. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren, nur für die Verwendung oder nur für die Vorrichtung beschrieben. Sie sollen jedoch unabhängig davon sowohl für das Verfahren als auch für eine solche Verwendung sowie eine entsprechende Vorrichtung selbstständig und unabhängig voneinander gelten können. Der Wortlaut der Ansprüche wird durch ausdrückliche Bezugnahme zum Inhalt der Beschreibung gemacht.

Das Verfahren dient dazu, einen Gegenstand in eine Folie zu verpacken, wobei der Gegenstand auf einem Träger angeordnet ist. Es können auch mehrere, insbesondere gleichartige oder gleiche, Gegenstände auf einem einzigen Träger sein. Vorzugsweise ist es aber ein einziger Träger in einer einzigen Folienverpackung. Die Folie kann dabei eine Polyolefinfolie sein bzw. ist eine vorgenannte Barrierefolie, vorzugsweise eine EVOH-Folie, ggf. auch eine mehrlagige Folie mit einer Lage EVOH-Folie, vorteilhaft als mittlere Lage zwischen zwei anderen Folienlagen oder Papierlagen. Sie ist für Bakterien und Keime nur schwer oder gar nicht durchdringbar. Ebenso kann sie für atmosphärische Gase wie Sauerstoff, Kohlendioxid odgl. nahezu undurchdringbar sein bzw. zu 95% bis 99% undurchdringbar sein. Bevorzugt ist sie luftdicht. Das Verfahren zum Verpacken weist die im Folgenden genannten Schritte auf. Die Folie bzw. Barrierefolie kann also ein System Folie auf Folie oder Folie auf Papier sein, wodurch vorteilhaft eine Sperrschicht und eine Siegelschicht gebildet sind. Ebenso kann ein System Papier auf Papier als Folie bzw. Barrierefolie verwendet werden, welches ein sogenanntes siegelfähiges Papier ist, das dann eine Sperrschicht und eine Siegelschicht aufweist, die aus Kunststoff bestehen, und somit das gesamte System Papier auf Papier auch als Folie im Sinn der vorliegenden Anmeldung betrachtet werden kann. Bei den vorgenannten Systemen werden die Papierbahnen zusammengeführt und mittels Druck und Hitze genauso wie bei Folien zusammengesiegelt oder geschweißt. Derartige siegelfähige Papiere sind beispielsweise von den Unternehmen Sappi Group oder Mondi plc. erhältlich.

Als Schritt A) wird ein Träger bereitgestellt, auf dem sich mindestens ein vorgenannter Gegenstand befindet. Der Träger überragt dabei den Gegenstand seitlich, zumindest wenn dies in der Draufsicht betrachtet wird. Vorteilhaft kann der Träger auch höher sein als der Gegenstand, ihn also überragen, was aber nicht zwingend ist. Alternativ kann der Träger an den zu verpackenden Gegenstand oder an die zu verpackenden Gegenstände angepasst sein, wobei er auch kleiner sein kann oder gleich groß sein kann. Die Größe des Trägers sollte in der Aufliegefläche maximal 10% von der Größe des Gegenstands abweichen. Bevorzugt ist der Träger größer bzw. überragt den Gegenstand eben.

Als Schritt B) wird der Träger mit dem Gegenstand darauf vollständig in die Barrierefolie eingehüllt oder eingeschlagen, ist also vollständig in der Folie. Dabei kann die Folie noch an mindestens einer Stelle oder einer Seite entlang einer Seite des Trägers offen sein. Dies ist zum einen ohnehin ein Zwischen-Stadium während des Verpackens. Zum anderen kann dieses genutzt werden, da es dann mehrere Möglichkeiten gibt, die Folie bzw. den durch sie entstehenden und gebildeten Folienbeutel mit Träger und Gegenstand darin zu verschließen, vorzugsweise luftdicht zu verschließen.

Danach wird allgemein der Folienbeutel hergestellt bzw. verschlossen, wobei er vorzugsweise luftdicht verschlossen wird, um den verpackten Gegenstand bzw. das verpackte Lebensmittel besser haltbar zu machen. Eine erste Möglichkeit zum Verschließen der Barrierefolie um den Träger mit dem Gegenstand darauf kann einschließen, dass in dem dabei gebildeten Folienbeutel ein Unterdruck erzeugt wird. Dieses Erzeugen eines Unterdrucks kann auf mehrere Arten erfolgen, die nachfolgend noch näher erläutert werden. Der Unterdruck kann dazu dienen, dass sich der Folienbeutel an den Träger samt Gegenstand darauf etwas, weitgehend oder vollständig anpasst. Gemäß Schritt C) wird der Folienbeutel verschlossen, vorteilhaft mit einem Unterdruck darin verschlossen, wobei der Unterdruck vorteilhaft zwischen 0,1 bar und 0,5 bar liegen kann.

Alternativ zu dem genannten Schritt C) kann in einem Schritt D) ein vollständiges Verschließen der Barrierefolie um den Träger mit dem Gegenstand darauf zur Bildung eines Folienbeutels vorsehen, dass an dem fertigen Folienbeutel ein Überdruckventil angebracht ist. Ein solches Überdruckventil kann ähnlich ausgebildet sein wie es beispielsweise von Verpackungen für Kaffeebohnen odgl. bekannt ist. Es kann vorteilhaft an einer Oberseite des Folienbeutels angebracht sein, besonders vorteilhaft hin zu einer Seite versetzt bzw. so angebracht, dass es nicht an der aufgrund des verpackten Gegenstands höchsten Stelle der Verpackung bzw. des Folienbeutels angeordnet ist.

Der Folienbeutel wird verschlossen bzw. die Barrierefolie bildet den Folienbeutel beim Verschließen dadurch, dass mindestens zwei Lagen der Barrierefolie aufeinandergelegt werden und mittels thermischen Verschweißens verbunden werden, der Folienbeutel wird also thermisch verschweißt und so verschlossen. Dies kann grundsätzlich auf bekannte Art und Weise erfolgen, wie nachfolgend noch näher erläutert wird. Die Barrierefolie bzw. der Folienbeutel werden dabei nicht thermisch geschrumpft oder mit signifikanter Erhöhung der Temperatur bzw. Erwärmung behandelt. An sich sollten die Barrierefolie bzw. der Folienbeutel ihre ursprüngliche Größe behalten.

Während einer späteren thermischen Einwirkung, beispielsweise aufgrund warmer Umgebung, kann sich in dem Folienbeutel eingeschlossene Luft grundsätzlich aufgrund Erwärmung ausdehnen. Wird gemäß Schritt C) ein Unterdruck bzw. ein ausreichender Unterdruck in dem Folienbeutel erzeugt, so dehnt sich diese Unterdruck-Atmosphäre auch durch eine mögliche Erwärmung nicht oder nicht stark aus. Zumindest ist dies nicht so stark, dass es stören würde. Der Träger mit dem mindestens einen Gegenstand darauf ist fest und eng in dem Folienbeutel eingepackt, vorteilhaft unter Spannung.

Ein Überdruckventil kann dazu dienen, die sich in dem Folienbeutel befindende und nicht unter Überdruck stehende Luft, die sich aufgrund einer möglichen Erwärmung ausdehnt, nach außen abzulassen bzw. herauszulassen. Da das Überdruckventil ein Einwegventil ist, wird beim Abkühlen keine Umgebungsluft angesaugt, im Ergebnis liegt eine Verpackung in einem Folienbeutel vor. Das Überdruckventil verbleibt einfach an dem Folienbeutel.

Somit gibt es im Rahmen der Erfindung mehrere Möglichkeiten, um das Ziel eines in Barrierefolie eingepackten Gegenstands auf einem Träger zu erreichen.

Die Maßnahme von Schritt D) kann dazu dienen, Auswirkungen auf die Barrierefolie durch temperaturbedingtes Ausdehnen von in dem Folienbeutel befindlicher Luft oder Gasen zu verringern oder zu vermeiden.

Als weitere Alternative zu dem Schritt D) können Gas und/oder Luft aus dem Folienbeutel vor dessen vollständigem Verschließen herausgedrückt werden, entweder teilweise oder weitgehend, beispielsweise 10% bis 40% oder sogar bis 60%. Dies kann bevorzugt dadurch erfolgen, dass Druck von einer Seite, insbesondere von oben, auf den Folienbeutel aufgebracht wird. Besonders vorteilhaft erfolgt dies flächig und nachgiebig oder flexibel, so dass quasi überschüssige Luft bzw. Gas aus dem Folienbeutel herausgedrückt werden können bzw. dieser etwas flachgedrückt wird. Der Effekt ist ähnlich, wie wenn aus dem Folienbeutel kurz vor dessen vollständigem Verschließen abgesaugt wird. Bei einer möglichen späteren Erwärmung erfolgt dann ein geringeres oder gar kein Aufblähen des luftdicht verschlossenen Folienbeutels aufgrund von darin enthaltener Luft oder Gas.

In Ausgestaltung der Erfindung kann die Barrierefolie eine Stärke zwischen 10 µm und 100 µm aufweisen, vorzugsweise zwischen 10 µm und 50 µm oder zwischen 20 µm und 30 µm. Durch die relativ geringe Stärke kann die Menge an entstehendem Kunststoffabfall reduziert werden. Die Folie für den Folienbeutel bzw. für die Verpackung kann entweder aus zwei getrennten Bahnen Flachfolie bestehen, wobei die beiden Bahnen vorteilhaft gleiche Breite aufweisen und übereinander mit etwas Abstand geführt werden, wobei der Träger mit dem zu verpackenden Gegenstand darin oder darauf zwischen den beiden Bahnen liegt. Dann werden im Verfahren vier luftdichte Schweißnähte gebildet, um den Folienbeutel zu erzeugen, wobei diese Schweißnähte vorzugsweise aneinander anschließen und durchgehend um den Folienbeutel herum verlaufen. Alternativ kann aus einer einzigen Bahn Flachfolie ein sogenannter Halbschlauch gebildet sein oder gebildet werden, so dass eine einzige Bahn Flachfolie sozusagen auf sich selbst entlang einer Längsseite gefaltet wird. Das Resultat ist ein sogenannter Halbschlauch. In diesen Halbschlauch wird dann der Träger mit dem Gegenstand darin eingebracht, um letztlich als Folienbeutel verpackt zu werden, wobei hierfür lediglich drei Schweißnähte gebildet werden. Dort wo bei einem Verfahren mit zwei getrennten Bahnen Flachfolie die vierte Schweißnaht war, ist die Folienbahn ja sozusagen durchgehend aufgrund des Aufeinanderfaltens. Die gebildeten Schweißnähte liegen dann jeweils an den Stirnseiten einer Verpackung bzw. eines Folienbeutels in der Durchlaufrichtung gesehen und seitlich entlang einer der Längsseiten. In weiterer Ausgestaltung der Erfindung ist eine Barrierefolie vorteilhaft siegelfähig bzw. kann durch Hitze versiegelt oder verschweißt werden, entweder mit anderen Materialien oder vorteilhaft mit sich selbst. Dazu kann sie zwei Folienlagen aufweisen, vorteilhaft aus PE, die zwischen sich eine sogenannte Barriereschicht aufweisen. Diese Folienlagen sowie die Barriereschicht sind fest miteinander verbunden. Die Barrierefolie kann co-extrudiert sein.

In Ausbildung der Erfindung kann die Barrierefolie ausgewählt sein aus der Gruppe: EVOH, PO, LDPE, HDPE, VCI, ESD, oder zumindest eine Lage einer mehrlagigen Barrierefolie kann daraus bestehen.

In weiterer Ausgestaltung der Erfindung kann vorgesehen sein, dass ein Unterdruck in dem Folienbeutel erzeugt wird derart, dass der Folienbeutel mit dem Unterdruck darin verschlossen wird. Dabei kann der Unterdruck während des vollständigen Verschließens erzeugt werden und aufrechterhalten werden. Er kann dabei schwanken. Unter Umständen kann der Unterdruck auch so erzeugt werden bzw. es kann versucht werden, dass er bis kurz vor dem Verschließen des Folienbeutels oder Verschweißen von Folienlagen aktiv erzeugt wird, beispielsweise durch Drücken auf den Folienbeutel oder durch Absaugen, dies aber dann eben gestoppt wird. Kurz nach einem Stoppen, vorzugsweise maximal 2 Sekunden oder maximal 1 Sekunde danach, kann dann der Folienbeutel vollständig verschlossen werden. Innerhalb dieser sehr kurzen Zeit kann dann kein vollständiger Druckausgleich erfolgen, so dass im Inneren des verschlossenen Folienbeutels noch ein ausreichender Unterdruck vorhanden ist. So kann durch die letzte verbliebene Öffnung im Folienbeutel noch Luft abgesaugt werden oder entweichen, diese wird dann sozusagen erst im letzten Moment verschlossen, vorzugsweise luftdicht verschlossen.

Bevorzugt kann der Unterdruck, der in Schritt C) oder in Schritt D) in dem Folienbeutel nach vollständigem Verschließen erzeugt worden ist oder besteht, zwischen 0,01 bar und 0,9 bar liegen, besonders bevorzugt zwischen 0,1 bar und 0,5 bar liegen. Dies reicht aus. Auch für diesen Unterdruck ist ein luftdichtes Verschließen vorteilhaft bzw. sogar notwendig.

In vorteilhafter Ausgestaltung der Erfindung kann vorgesehen sein, dass der Träger mit dem Gegenstand darauf zuerst derart in die Barrierefolie eingebracht wird, dass die Barrierefolie unterhalb des Trägers ist und an einer ersten Lateralseite durchgängig und ununterbrochen nach oben auf den Träger samt Gegenstand darauf überlappt. An der gegenüberliegenden zweiten Lateralseite können beide Folienlagen über den Träger und den Gegenstand darauf überstehen. Dies ist dann ein sogenannter Folienhalbschlauch, der beispielsweise gemäß der EP 806 346 A2 erzeugt werden kann und den Vorteil aufweist, dass nur eine einzige Folienbahn benötigt wird und entlang nur einer einzigen Lateralseite, nämlich der ersten Lateralseite, verschweißt werden muss. Anschließend können die beiden Folienlagen an dieser zweiten Lateralseite miteinander verschweißt werden, insbesondere mit einem Abstand zu der zweiten Lateralseite des Trägers, der weniger als 20% oder weniger als 10% des Abstands der beiden Lateralseiten zueinander beträgt. Ein Folienüberstand außerhalb des Folienbeutels kann dabei abgetrennt werden.

In vorteilhafter Ausgestaltung der Erfindung erfolgt das Verschweißen mindestens an der zweiten Lateralseite, vorteilhaft an beiden Lateralseiten, im Durchlauf. Besonders vorteilhaft erfolgt es konstant bzw. mit konstanter Geschwindigkeit oder zumindest ohne Unterbrechung.

Vorteilhaft kann vorgesehen sein, dass das Verschweißen, insbesondere im Durchlauf, mittels einer erfindungsgemäßen Seitenschweißeinrichtung erfolgt, die nachfolgend noch näher beschrieben wird.

Beim Verpacken in die Barrierefolie bzw. in den Folienbeutel kann der Träger mit dem Gegenstand darauf entlang einer Transportrichtung bewegt werden, wobei die beiden Folienlagen in einer quer zu dieser Transportrichtung verlaufenden Querrichtung miteinander verbunden sind oder verbunden werden durch Verschweißen. Dies kann an einer Vorderseite des Trägers in Transportrichtung gesehen bereits erfolgt sein, was beim seriellen Verpacken aus dem vorgenannten Stand der Technik auch bekannt ist. Bevorzugt kann der Folienbeutel endgültig verschlossen werden durch Verschweißen der beiden Folienlagen miteinander an einer der Vorderseite gegenüber liegenden Rückseite, dies ist quasi die letzte Schweißnaht.

In einer Ausgestaltung der Erfindung kann in dem Inneren des Folienbeutels normale Luft enthalten sein, also kein Schutzgas enthalten sein, vorzugsweise mit dem Unterdruck, das muss aber nicht sein. So kann der Aufwand für ein Schutzgas eingespart werden, der vor allem gleichzeitig mit dem Anlegen bzw. Erzeugen des Unterdrucks bedeutend wäre.

Alternativ kann in dem Inneren des Folienbeutels ein Schutzgas enthalten sein, beispielsweise ein übliches Schutzgas für Lebensmittel wie Kohlendioxid oder Stickstoff. Auch hier kann vorzugsweise der vorgenannte Unterdruck vorhanden sein, das muss aber nicht sein.

In Ausgestaltung der Erfindung kann der Unterdruck gemäß dem Schritt C) in dem Folienbeutel dadurch erzeugt werden, dass eine längliche, eigenstabile Rohrleitung oder ein sonstiges Absaugrohr oder ein Absaugschlauch in den noch nicht vollständig verschlossenen Folienbeutel eingebracht wird oder er sich darin befindet. Dann können dadurch Luft aus dem Folienbeutel abgesaugt werden bzw. der Unterdruck erzeugt werden, wobei insbesondere die Luft abgesaugt wird, während der Folienbeutel verschlossen wird, vorzugsweise luftdicht verschlossen wird. Die Rohrleitung sollte dabei vor dem vollständigen Verschließen des Folienbeutels herausgezogen wird, also solange der Folienbeutel nur teilweise verschlossen ist.

In anderer Ausgestaltung der Erfindung kann der Unterdruck gemäß Schritt C) in dem Folienbeutel erzeugt wird, indem in einem seitlich verschlossenen Folienschlauch für mehrere Folienbeutel ein Unterdruck erzeugt wird. In diesem Folienschlauch sind stets mehrere Gegenstände hintereinander aufgereiht, vorteilhaft werden sie weitgehend kontinuierlich bewegt. Ein quer zur Längsrichtung verlaufender Schweißstempel bzw. eine sogenannte Querschweißeinrichtung kann dann jeweils der erste Gegenstand in dem Folienschlauch außerhalb einer den Unterdruck erzeugenden Funktionseinheit absiegeln bzw. verschließen und abtrennen. Die Querschweißeinrichtung sollte vorzugsweise mitlaufend ausgebildet sein, zumindest für eine kurze Strecke, so dass sie während des Mitlaufens absiegeln bzw. verschließen und abtrennen kann. So braucht die Bewegung der Folienbeutel bzw. der zu verpackenden Gegenstände nicht unterbrochen zu werden. Ein vorgenanntes Absaugrohr odgl. zum Erzeugen des Unterdrucks kann dann unbewegbar bzw. statisch in dem Folienschlauch stehen, vorteilhaft in dem Bereich an der Querschweißeinrichtung, besonders vorteilhaft 10 mm bis 70 mm, beispielsweise 40 mm, von dieser entfernt.

Eine solche Querschweißeinrichtung kann ganz allgemein vorgesehen sein, um die Folienbeutel in Längsrichtung gesehen abzuteilen und vor allem zu verschweißen und somit auch zu verschließen, vorzugsweise luftdicht.

In nochmals weiterer Ausgestaltung der Erfindung können Gas und/oder Luft aus dem Folienbeutel vor dem vollständigen Verschließen des Folienbeutels herausgedrückt werden, also nicht abgesaugt werden. Dies kann vorzugsweise erfolgen, indem Druck von einer Seite, insbesondere von oben, flächig und nachgiebig oder flexibel auf den Folienbeutel aufgebracht bzw. ausgeübt wird. Dies kann mit einer weich-elastischen oder nachgiebigen Platte, Bürste oder einem Schaumstoffkissen odgl. gemacht werden. Alternativ kann es mit Druckluft gemacht werden, was den Vorteil von geringerem Verschleiß und geringere Gefahr von Beschädigung aufweist.

Vorteilhaft kann eine sogenannte Barrierefolie zum Verpacken eines Gegenstands auf einem Träger mit einem zuvor beschriebenen Verfahren verwendet werden. Eine solche Barrierefolie kann eine Dicke zwischen 10 µm und 100 µm aufweisen, vorzugsweise zwischen 10 µm und 50 µm oder zwischen 20 µm und 30 µm. Sie kann vorteilhaft nahezu ein Monomaterial sein und beispielsweise zu 95% aus PE bestehen, wobei sie mehrlagig sein kann und 2 dünne Lagen aus PE-Folie bestehen können. Zu 5% kann die Barrierefolie aus anderem Material bestehen, welches eine Barriereschicht zwischen den beiden Lagen von PE-Folie bildet. Diese Barriereschicht verhindert das Eindringen von Bakterien, Keimen udgl.. Eine solche Barrierefolie weist den großen Vorteil auf, dass sie sehr gut recycelt werden kann. Dies gilt auch für einen vorgenannte Träger, wenn dieser beispielsweise aus Pappe oder Papiermaterial besteht, selbst wenn er eine dünne Beschichtung aus Wachs, dünne Folie odgl. aufweisen sollte, die den Träger wasserundurchlässig bzw. feuchtigkeitsbeständig machen. Zum besseren Recycling sollte darauf aber verzichtet werden, ggf. kann ein separates Saugvlies aus kompostierbarem oder recyclingfähigem, Material auf dem Träger vorgesehen sein.

Eine weitere mögliche Barrierefolie kann nicht nur eine Polyolefinfolie mit einer Barriere sein, die grundsätzlich schrumpfbar wäre, auch wenn sie im Rahmen der Erfindung nicht geschrumpft wird. Es kann auch jede andere Barrierefolie sogar in Kombination mit einem Barrierepapier verwendet werden, wenn es zwei Folienbahnen sind. Dabei wird das Barrierepapier als Träger verwendet, und die Folie wird auf das Papier gesiegelt.

Eine erfindungsgemäße Vorrichtung, mit der das vorgeschriebene Verfahren durchgeführt werden kann, weist für ein Verschweißen der Barrierefolie an den Lateralseiten der Gegenstände eine Seitenschweißeinrichtung mit zwei Räderpaaren auf. Die Räderpaare sind dabei in Durchlaufrichtung der Gegenstände hintereinander angeordnet, wobei bei jedem der Räderpaare zwei Räder gegeneinandergedrückt sind, wobei vorzugsweise ein Rad davon über dem anderen angeordnet ist. Dabei ist mindestens eines der Räder eines Räderpaares beheizt. Ein beheiztes Rad kann aus Metall bestehen, vorzugsweise Edelstahl, während das andere Rad, gegen das es gedrückt ist, eine elastische bzw. weiche Außenseite aufweist, in die sich das metallische Rad eindrücken kann. So ist ein sicheres Zusammendrücken und Verschweißen der Barrierefolie gewährleistet. Die Räderpaare bewegen zwischen sich mindestens zwei aufeinanderliegende Lagen der Barrierefolie und verbinden sie miteinander bzw. verschließen sie durch Verschweißen, um so den Folienbeutel zu bilden. Eine ähnliche Seitenschweißeinrichtung ist bekannt aus der DE 199 05 888 A1, die allerdings nur ein einziges Räderpaar aufweist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Seitenansicht auf ein Lachsfilet in einem schalenförmigen Träger aus Pappe, die nachfolgend zu verpacken sind,
- Fig. 2: der Träger mit dem Lachsfilet aus Fig. 1 eingehüllt in einen Folienbeutel,
- Fig. 3: eine Draufsicht auf den Folienbeutel aus Fig. 2,
- Fig. 4: eine vereinfachte Darstellung während eines Verpackungsverfahrens für den Träger samt Lachsfilet aus Fig. 2, wobei aus dem noch nicht verschlossenen Folienbeutel Luft abgesaugt wird,
- Fig. 5: eine Draufsicht auf einen an den Rändern geschlossenen Folienbeutel entsprechend Fig. 3 mit einem Entlüftungsloch,
- Fig. 6: eine Darstellung ähnlich Fig. 5 mit Folienbeutel, wobei das Entlüftungsloch durch einen Aufkleber luftdicht verschlossen worden ist,
- Fig. 7: eine seitliche Darstellung einer Möglichkeit zum formelastischen Ausüben von Druck auf den Folienbeutel entsprechend Fig. 4, bevor das Entlüftungsloch verschlossen wird,
- Fig. 8: eine Darstellung eines Folienbeutels ähnlich Fig. 3 mit einem Überdruckventil an dessen Oberseite,
- Fig. 9: eine Darstellung einer Verpackung ähnlich Fig. 2, die mit unterschiedlich breiten Banderolen aus Papier umhüllt ist und
- Fig. 10: eine vereinfachte Darstellung einer Seitenschweißeinrichtung mit zwei Räderpaaren zum Verschweißen des Folienbeutels.

### Detaillierte Beschreibung der Ausführungsbeispiele

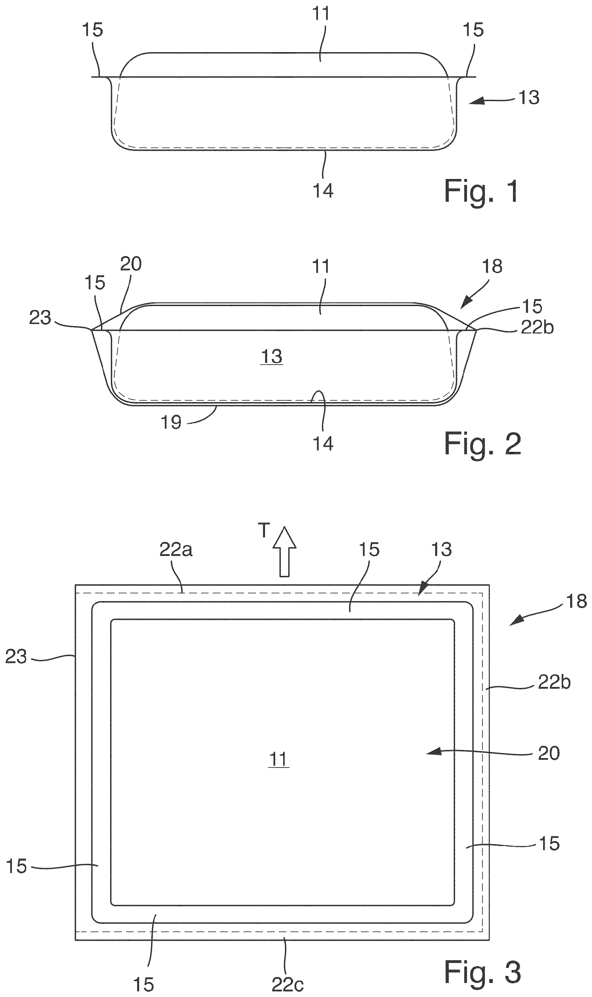

In der Fig. 1 ist ein Stück Lachsfilet 11 dargestellt als Lebensmittel bzw. als zu verpackender Gegenstand, das auf einem Träger 13 liegt. Der Träger 13 besteht aus Pappe, evtl. mit einer sehr dünnen Beschichtung an seiner Oberseite zu dem Lachsfilet 11 hin. Alternativ kann eine separate Auflage aus Saugvlies vorgesehen sein. Der Träger 13 sollte vorteilhaft frei von Kunststoff sein und/oder recyclingfähig sein. Er ist schalenartig ausgebildet mit einem Trägerboden 14 und einem oben umgebogenen und nach außen abstehenden umlaufenden Trägerrand 15. Dies zeigt auch ein Vergleich mit der Darstellung der Fig. 3. Derartige Träger 13 sind im Stand der Technik bekannt. Durch eine separate Auflage aus Saugvlies kann der Träger 13 aus Karton von dem Saft des Lachsfilets 11 nicht durchweicht werden und bleibt so stabil.

Dieses Gebinde aus Lachsfilet 11 auf dem Träger 13 muss nun für den Verkauf verpackt werden, und zwar in einen Folienbeutel. Vorteilhaft erfolgt dies in einer Fabrik, in der auch der Lachs in die Lachsfilets 11 zerteilt wird. In der Fig. 2 ist ein solcher Folienbeutel 18 um den Träger 13 mit Lachsfilet 11 darin dargestellt, wobei der Folienbeutel 18 hier eng an die Form bzw. Kontur des Trägers 13 mit Lachsfilet 11 darin angepasst ist. Ein Vorteil dieses engen Anliegens ist, dass das Gebinde aus Träger 13 mit Lachsfilet 11 darin etwas stabilisiert wird. Die Folie für den Folienbeutel 18 ist eine spezielle Barrierefolie bzw. sogenannte EVOH-Folie, wie sie eingangs beschrieben worden ist. Es kann vorteilhaft aber auch eine andere der eingangs genannten Folien verwendet werden. Der Folienbeutel 18 könnte auch etwas lose oder mit mehr Raum um den Träger herum ausgebildet sein.

Der Folienbeutel 18 ist in Fig. 3 in Draufsicht dargestellt zur besseren Erläuterung mit einer Transportrichtung T. Der Folienbeutel 18 weist eine Unterseite 19, eine Oberseite 20 und drei umlaufende Seitenschweißnähte 22a, 22b und 22c auf. An der vierten Seite 23, also links, verläuft die Folie durchgängig von der Unterseite 19 zur Oberseite 20. Der Folienbeutel 18 ist also mit einem vorgenannten Halbfolienschlauch gebildet und muss deswegen nur an drei Seiten mittels thermischen Schweißens verbunden werden.

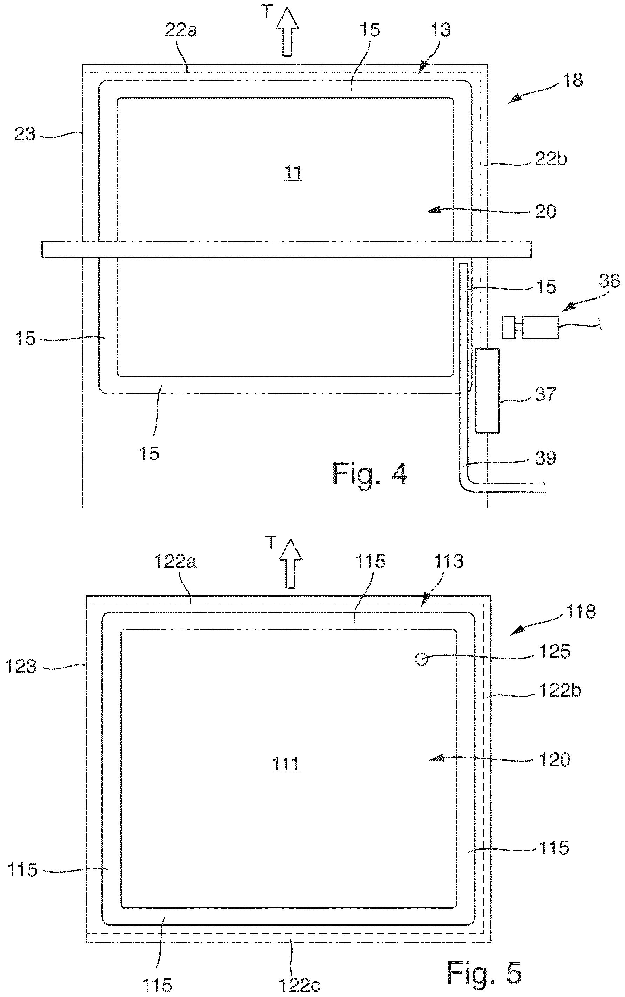

Die Randschweißnähte 22a bis 22c verschließen den Folienbeutel 18 luftdicht, so dass keine Verunreinigungen oder Keime in den Folienbeutel 18 und an das Lachsfilet 11 gelangen können. Um Probleme mit Luft und ggf. Keimen innerhalb des geschlossenen Folienbeutels 18 zu vermeiden, kann gemäß Fig. 4 während des Verschweißens Unterdruck in dem Folienbeutel 18 erzeugt werden bzw. Luft abgesaugt werden. In der Fig. 4 ist dies sehr vereinfacht schematisch dadurch dargestellt, dass der Träger 13 mit dem Lachsfilet 11 darauf bereits an Oberseite und Unterseite in den Halbfolienschlauch eingeschlagen worden ist, wie dies aus dem vorgenannten Stand der Technik bekannt ist. Die vordere Randschweißnaht 22a ist bereits erzeugt durch Abtrennen des an sich kontinuierlichen Halbfolienschlauchs mittels einer vereinfacht dargestellten Querschweißeinrichtung 35. Diese vordere Randschweißnaht 22a geht über die gesamte Breite und verschließt den Folienbeutel hier bzw. verbindet Unterseite 19 und Oberseite 18 fest und luftdicht miteinander.

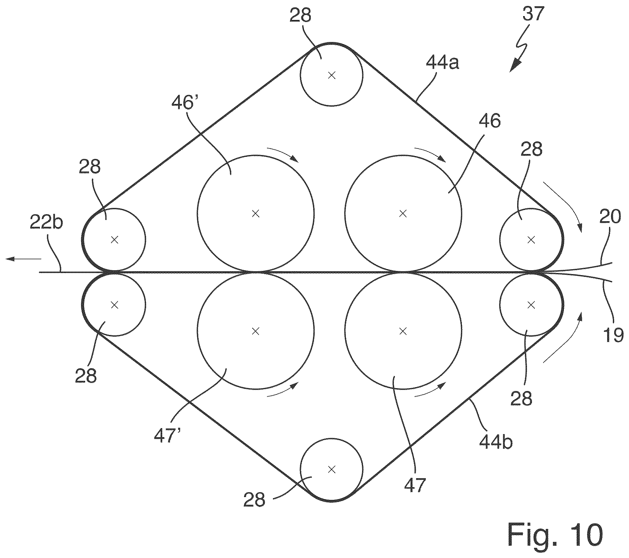

Die rechte Randschweißnaht 22b ist ebenfalls vollständig hergestellt, und zwar mittels einer ebenfalls aus dem Stand der Technik bekannten Seitenschweißeinrichtung 37. Derartige Seitenschweißeinrichtungen 37 sind beispielsweise bekannt aus der DE 199 05 888 A1 oder der DE 10 2006 018 083 A1. Eine erfindungsgemäße Seitenschweißeinrichtung ist nachfolgend noch in Fig. 10 dargestellt, die durch die zwei verwendeten Räderpaare ein deutlich besseres und sichereres Verschweißen gewährleistet. So kann sichergestellt werden, dass der Folienbeutel auch tatsächlich luftdicht ist. Entsprechende Querschweißeinrichtungen sind beispielsweise bekannt aus der DE 10 2011 075 532 A1. An der Seitenschweißeinrichtung 37 ist eine Kamera 38 angeordnet, die zu einer Überwachungsvorrichtung gehört, mit welcher eine Qualität bzw. eine gewünschte und ordnungsgemäße Herstellung der Randschweißnaht 22b an der Seite überwacht werden kann. Sollten sich hier Qualitätsprobleme ergeben, so kann die entsprechende Verpackung direkt ausgeschleust werden und entsorgt werden, oder der darin befindliche Träger 13 samt Lachsfilet 11 kann erneut verpackt werden.

An der in Transportrichtung T hinten liegenden Seite des Trägers 13 bzw. des Folienbeutels 18, an dem gemäß Fig. 3 die Randschweißnaht 22c bewirkt sein soll, ist von hinten ein Absaugrohr 39 in den in diesem Bereich noch offenen Folienbeutel 18 eingeführt. Damit kann Luft aus dem Folienbeutel 18 abgesaugt werden bzw. so darin ein Unterdruck erzeugt werden. Dies bewirkt ein Anlegen der Unterseite 19 des Folienbeutels an den Trägerboden 14 von unten und an dessen Seitenwände, vor allem aber ein Anliegen der Oberseite 20 der Folie auf die Oberseite des Lachsfilets 11. Durch dessen üblicherweise leicht feuchte Oberseite bleibt die Folie hier auch haften, was den Vorteil hat, dass dann keine Luft nachströmen kann. Aus der Fig. 4 ist nämlich erkennbar, dass beim Transport des Folienbeutels 18 mit Träger 13 und Lachsfilet 11 darin entlang der Transportrichtung T das Absaugrohr 39 aus diesem herausrutscht bzw. nicht mehr in diesen hineinragt und somit auch keinen Unterdruck mehr erzeugen kann. Luft könnte also leicht wieder nachströmen. Deswegen ist die Querschweißeinrichtung 35 erkennbar nahe an dem Absaugrohr 39 in der Draufsicht. Sobald der hintere Trägerrand 15 nämlich unterhalb der Querschweißeinrichtung 35 ist bzw. ein Stück weiter ist, verschweißt die Querschweißeinrichtung 35 Unterseite 19 und Oberseite 20 des Folienbeutels 18 und verschließt diesen. Das Absaugrohr ist kurz vorher aus dem Folienbeutel herausgezogen worden. Aufgrund der vorgenannten Umstände kann dies so bewirkt werden, dass immer noch ein zumindest leichter Unterdruck in dem nun geschlossenen Folienbeutel 18 herrscht.

Da hinter dem Folienbeutel 18 gemäß der Fig. 4 sofort der nächste Folienbeutel mit einem Träger 13 mit Lachsfilet 11 darin herantransportiert wird, kann das Absaugrohr 39 nicht stationär in dieser Position bleiben. Es muss unter Umständen jedes Mal sozusagen neu von hinten in einen teilgeschlossenen Folienbeutel eingeführt werden. Alternativ kann zu dem hinteren Trägerrand 15 hin, wo die Randschweißnaht 22c platziert wird, der Halbfolienschlauch kontinuierlich weiterlaufen mit Trägern 13 darin. Dann kann es ausreichen, wenn lange vor der Querschweißeinrichtung 35 und der Seitenschweißeinrichtung 37, beispielsweise 1 m oder 2 m, das Absaugrohr 39 in diesen Halbfolienschlauch hineinragt und Luft absaugt. Zwar kann Luft in den Halbfolienschlauch jeweils an der rechten Seite nachströmen, während an der Vorderseite die Randschweißnaht 22a ja mittels der Querschweißeinrichtung 35 stets verschlossen ist. Trotz dieser nachströmenden Luft kann aber in dem Folienbeutel bis zu dem Moment, an dem er mit der Querschweißeinrichtung 35 verschlossen wird und somit auch von dem restlichen Halbfolienschlauch abgetrennt wird, der die Luftabsaugung begünstigt, ein Unterdruck aufrechterhalten werden.

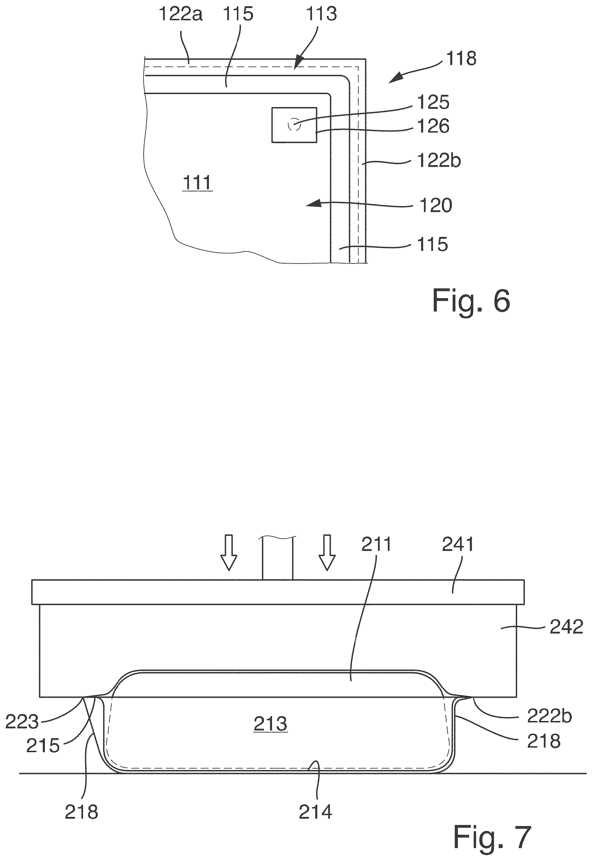

Eine vorgenannte alternative Möglichkeit, das möglicherweise auftretende Problem einer Volumenausdehnung bei einer evtl. Erwärmung zu vermeiden oder auszugleichen, ist in den Fig. 5 und 6 dargestellt. Die Draufsicht auf die Fig. 5 zeigt entsprechend Fig. 2 und 3 einen vollständig verschlossenen Folienbeutel 118 mit einem Träger 13 samt Lachsfilet 111 darin. Der Folienbeutel 118 ist an der linken freien Seite 123 durchgängig, da er aus einem Halbfolienschlauch gebildet worden ist wie zuvor beschrieben. An den Randschweißnähten 122a, 122b und 122c ist er verschweißt entsprechend der Darstellung der Fig. 4. An einer Oberseite 120 weist der Folienbeutel 118 jedoch ein Entlüftungsloch 125 auf, das einen Durchmesser von beispielsweise 2 mm oder 3 mm haben kann. Dieses kann auf unterschiedliche Art und Weise eingebracht werden. Es kann durch Einstechen hergestellt werden, alternativ durch thermische Einwirkung, um die Ränder des Entlüftungslochs 125 so zu stärken, dass es nicht so leicht weiter einreißen kann. Es könnte anstelle an der Oberseite 120 auch nahe an einer der Randschweißnähte 122a bis 122c liegen.

Nach einem Verpacken kann dann gemäß Fig. 6 ein Aufkleber 126 auf die Oberseite 120 und über das Entlüftungsloch 125 geklebt werden. Dieser Aufkleber 126 kann vorteilhaft auch Informationen zum Inhalt des Folienbeutels 118 enthalten, alternativ zu dessen spezieller Verpackungsart, beispielsweise einem Markennamen dieser speziellen Verpackungsart. Dadurch kann verhindert werden, dass durch das Entlüftungsloch 125 vorgenannte Verunreinigungen oder Keime in den Folienbeutel 118 hinein und an das Lachsfilet 111 gelangen könnten.

In der Fig. 7 ist eine Möglichkeit dargestellt, wie bei einem Folienbeutel 218 entsprechend Fig. 5 mit einem in Fig. 7 nicht zu erkennenden Entlüftungsloch möglichst viel Luft daraus entfernt werden kann. Dazu kann der Folienbeutel 218 mit Träger 13 und Lachsfilet 211 darin auf eine Unterlage gelegt werden. Von oben kommt eine Art weicher Stempel 241 heran, beispielsweise mit einer elastischen Schaumstoffunterseite 242. Diese Schaumstoffunterseite 242 ist so weich, dass sie sozusagen Luft aus dem Folienbeutel 218 herausdrückt, welche durch das Entlüftungsloch entweichen kann. Gleichzeitig beschädigt oder beeinträchtigt sie den Inhalt des Folienbeutels 218 aber nicht. Alternativ zu einem solchen Stempel 241 könnte auch von oben mit Druckluft darauf geblasen werden, ggf. zusätzlich auch von unten, was auf den gesamten Folienbeutel 218 mit Inhalt darin dieselbe Wirkung hat. Nach Entfernen des Stempels 241 oder Stoppen der Druckluft kann wie zuvor erläutert das Entlüftungsloch wieder verschlossen werden, beispielsweise mittels eines genannten Aufklebers, siehe die Fig. 6. So kann möglichst viel Luft durch das Entlüftungsloch aus dem Folienbeutel 218 entfernt werden, welche möglicherweise Keime enthält.

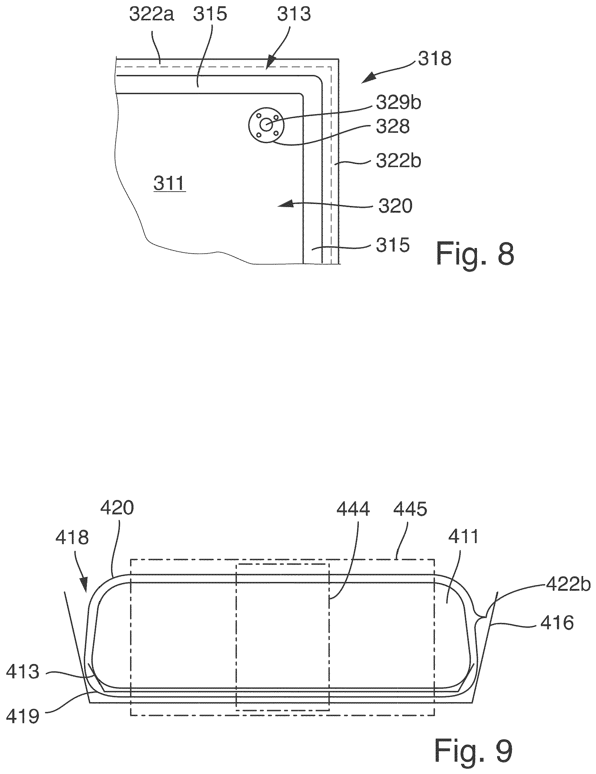

Eine nochmals weitere Möglichkeit entsprechend dem vorgenannten Schritt D) ist in Fig. 8 dargestellt. Hier ist an einer Oberseite 320 eines Folienbeutels 318 mit Träger 13 und Lachsfilet 311 darin ein Überdruckventil 328 vorgesehen. Es kann beispielsweise an ein Entlüftungsloch ähnlich der Fig. 5 angesetzt werden, vorteilhaft nach dem Herstellen des an sich fertigen Folienbeutels 318 mit Randschweißnähten 322a bis 322c. Derartige Überdruckventile 328 sind aus Lebensmittelverpackungen allgemein bekannt, beispielsweise aus Tüten für Kaffeebohnen. Sie weisen eine mittige Ausgangsöffnung 329 auf und innenliegend eine nicht erkennbare Membran odgl.. Durch dieses Ventil kann mittels Absaugvorrichtung überschüssiges Gasgemisch aktiv aus der Packung bzw. dem Folienbeutel 318 abgesaugt werden. Baut sich im Inneren des Folienbeutels 318 ein Überdruck auf, beispielsweise bei einer zuvor beschriebenen evtl. Erwärmung der Folie mit Volumenausdehnung aufgrund der Erwärmung, so kann die Luft durch das Überdruckventil 328 und die Ausgangsöffnung 329 austreten. Der Überdruck baut sich also problemlos ab. In die andere Richtung ist das Überdruckventil 328 luftdicht. Dies bedeutet, dass sich die Folie dann zusammenziehen kann, da die überschüssige bzw. enthaltene Luft ja entweichen kann. Nach dem Abkühlen oder schon währenddessen kann jedoch keine Luft in den Folienbeutel hineinströmen, was auch aus Hygienegründen bzgl. Keimen udgl. von Vorteil ist.

In weiterer Ausgestaltung der Erfindung kann vorgesehen sein, dass der Träger 13 samt Lachsfilet 11 darin derart in eine vorbedruckte Folie eingebracht wird, dass sich deren Aufdruck an genau gewünschter und vorherbestimmter Stelle befindet, insbesondere an einer Oberseite 20.

In der Fig. 9 ist in einer Darstellung ähnlich wie bei der Figur 2 eine nochmals weitere Möglichkeit gezeigt, wie ein Lachsfilet 411 als Gegenstand eingepackt und umverpackt sein kann. Das Lachsfilet 411 ist dabei entweder ohne irgendeinen Träger oder wie zuvor beschrieben auf einen flachen Träger 413 aus dünnem Karton aufgelegt. Dabei kann ein zuvor beschriebenes saugfähiges Saugvlies dazwischen gelegt sein. Hierum wird wiederum ein Folienbeutel 418 hergestellt durch vollständiges Einhüllen des Trägers 413 mit Lachsfilet 411 darauf in eine entsprechende Barrierefolie, der Folienbeutel 418 weist eine Oberseite 420 und eine rechts dargestellte Randschweißnaht 422b auf.

Der Folienbeutel 418 wiederum wird In eine stabile Außenschale 416 eingelegt, die wiederum aus Karton oder Kunststoff bestehen kann, wie es zuvor beschrieben worden ist. Diese Außenschale 416 soll der gesamten Verpackung eine ausreichende Stabilität zur Handhabung bei Transport, Darbietung in einem Regal in einem Geschäft, Einkauf und Weitertransport gewährleisten. Sie kann geschlossene Flächen bzw. laterale Außenseiten und eine Unterseite aufwiesen, diese können aber auch teilweise durchbrochen sein bzw. Öffnungen aufweisen oder sogar skelettartig mit relativ dünnen Stegen ausgebildet sein.

Eine erste Möglichkeit zur Fixierung des Folienbeutels 418 in der Außenschale 416 besteht darin, ihn auf der Oberseite des Bodens der Außenschale 416 festzukleben. Eine zweite Möglichkeit besteht im Vorsehen einer eher schmal ausgebildeten und gestrichelt dargestellten Banderole 444, vorteilhaft aus Papier oder dünne Folie. Auf dieser können beispielsweise auch ein Aufdruck oder ein Aufkleber mit Informationen zum Produkt bzw. zum Lachsfilet 411 aufgebracht sein. Alternativ zu der eher schmalen Banderole 444 kann eine relativ breite und strichpunktiert dargestellte Banderole 445 vorgesehen sein. Sie kann unter Umständen auch noch breiter ausgeführt sein und somit die gesamte Außenschale 416 einschließen bzw. umhüllen. Bevorzugt bestehen die Banderolen 444 und 445 aus Papier oder recyclingfähige Kunststoff. Sie sollten relativ eng anliegen, wodurch eine zusätzliche Stabilisierung des gesamten Gebildes möglich ist.

Eine nochmals weitere, hier nicht dargestellte dritte Möglichkeit besteht darin, mindestens einen schmalen Streifen nach Art einer schmalen Banderole in der Umhüllungsrichtung entsprechend Fig. 9 vorzusehen. Ein weiterer relativ schmaler Streifen sollte um 90 Grad verdreht dazu vorgesehen seien, so dass die beiden Streifen in der Draufsicht rechtwinklig zueinander verlaufen. Derartige sogenannte Straps sind auch von sonstigen Verpackungen bekannt. Sie verhindern, ähnlich wie die Banderolen 444 und 445, dass der Folienbeutel 418 von der Außenschale 416 getrennt wird oder herausfallen kann. Des Weiteren können sie eine zusätzliche Stabilität für eine einfachere Verpackung bewirken.

Grundsätzlich gilt für die Fig. 9, dass der Folienbeutel 418 enger an dem Lachsfilet 411 auf dem Träger 413 anlegen kann und sollte. Vor allem sollte dieser Folienbeutel 418 vollflächig und flach direkt auf der Oberseite der Außenschale 416 liegen. Eine der beiden dargestellten Banderolen 444 oder 445 sollte dann auch relativ eng darum geführt sein kann. Die hier etwas auseinander gezogene bzw. lose Darstellung weicht davon ab, um Details besser zu zeigen.

Die Fig. 10 zeigt die erfindungsgemäße Seitenschweißeinrichtung 37 von der Seite. Rechts laufen die Oberseite 20 und die Oberseite 19 der Folie ein, und links laufen sie als Randschweißnaht 20b heraus. Hier sind sie luftdicht miteinander verschweißt, und ein Überstand kann abgetrennt sein. Die Seiten Schweißeinrichtung 37 weist einen oberen umlaufenden Riemen 44a und einen unteren umlaufenden Riemen 44b auf. Die Riemen 44a bzw. 44b laufen um Umlenkrollen 28 um. Diese Umlenkrollen 28 sind angetrieben und drehen die Riemen 44a und 44b und halten sie unter Spannung. Die Riemen 44a und 44b dienen vor allem auch dazu, die Folien 19 und 20 zusammenzudrücken und zu transportieren.

Innerhalb der Riemen sind, von rechts kommend, ein erstes Räderpaar mit einem oberen Trenn-Schweißrad 46 und einem unteren Gegenrad 47 angeordnet. In Durchlaufrichtung dahinter und links davon ist ein zweites Räderpaar mit einem oberen Trenn-Schweißrad 46' und einem unteren Gegenrad 47' angeordnet. Die beiden Räderpaare bzw. die jeweiligen Räder können gleich bzw. identisch ausgebildet sein. Die Räderpaare oder zumindest eines der Räder jedes Räderpaars sind jeweils angetrieben, vorteilhaft synchron. In dem Bereich ihrer Anlage aneinander werden die beiden Folien 19 und 20 miteinander verbunden durch Verschweißen sowie ein Überstand abgetrennt, der aufgenommen und abtransportiert werden kann. Die Riemen 44a bzw. 44b verlaufen neben den Räderpaaren.

Die oberen Trenn-Schweißräder 46 und 46' weisen an einer Außenseite eine umlaufende abstehende Rippe bzw. Vorsprung auf, während die sonstige Außenseite flach ist. Die Außenseiten bzw. vorteilhaft die gesamten Trenn-Schweißräder 46 und 46' bestehen aus Metall und sind hart. Sie können vorteilhaft direkt beheizt sein, was hier nicht dargestellt ist, wobei es vor allem darauf ankommt, dass sie an der Außenseite bzw. an der umlaufenden abstehenden Rippe bzw. Vorsprung beheizt sind. So durchtrennen sie die Folien 19 und 20 sowie verschweißen sie miteinander, um den fertigen Folienbeutel luftdicht zu verschließen. Eine Außenseite der unteren Gegenräder 47 und 47' ist vorteilhaft flach und besteht aus elastischem Material, beispielsweise Gummi, teilflexiblem Material wie Fluorelastomer oder Silikonkautschuk. Es kann eine Shore-Härte zwischen 50 und 150 Shore A aufweisen. Die oberen Trenn-Schweißräder 46 und 46' sowie die unteren Gegenräder 47 und 47' können jeweils ausgebildet sein wie aus der vorgenannten DE 199 05 888 A1 bekannt ist.

## Patentansprüche

1. Verfahren zum Verpacken eines Gegenstands in eine Folie, wobei die Folie eine Barrierefolie ist, die für Bakterien und Keime undurchdringbar ist und vorzugsweise für atmosphärische Gase wie Sauerstoff, CO₂, nahezu undurchdringbar ist, wobei das Verfahren die folgenden Schritte aufweist:
A) Bereitstellen eines Trägers und des Gegenstands auf dem Träger, wobei der Träger in der Draufsicht den Gegenstand seitlich überragt,
B) vollständiges Einhüllen des Trägers mit dem Gegenstand darauf in die Barrierefolie,
C) vollständiges Verschließen der Barrierefolie um den Träger mit dem Gegenstand darauf, um einen Folienbeutel zu bilden,
D) alternativ zu Schritt C) erfolgt ein vollständiges Verschließen der Barrierefolie um den Träger mit dem Gegenstand darauf, um einen Folienbeutel zu bilden, wobei der fertige Folienbeutel mit einem an der Barrierefolie, insbesondere an einer Oberseite des Folienbeutels, angebrachten Überdruckventil versehen ist,
wobei der Folienbeutel mittels thermischen Verschweißens von mindestens zwei aufeinanderliegenden Lagen der Barrierefolie verschlossen wird.

2. Verfahren nach Anspruch 1, **dadurch gekennzeichnet, dass** die Barrierefolie eine Stärke zwischen 10 µm und 100 µm aufweist, vorzugsweise zwischen 10 µm und 50 µm oder zwischen 20 µm und 30 µm aufweist.

3. Verfahren nach Anspruch 1 oder 2, **dadurch gekennzeichnet, dass** die Barrierefolie siegelfähig ist bzw. zwei Folienlagen aus PE aufweist mit einer Barriereschicht dazwischen, wobei vorzugsweise die Barrierefolie co-extrudiert ist.

4. Verfahren nach einem der vorhergehenden Ansprüche, **dadurch gekennzeichnet, dass** die Barrierefolie ausgewählt ist aus der Gruppe: EVOH, PE, PO, LDPE, HDPE, VCI, ESD.

5. Verfahren nach einem der vorhergehenden Ansprüche, **dadurch gekennzeichnet, dass** ein Unterdruck in dem Folienbeutel erzeugt wird derart, dass der Folienbeutel mit Unterdruck darin verschlossen wird, wobei der Unterdruck während des vollständigen Verschließens erzeugt wird bzw. erzeugt ist und aufrechterhalten wird.

6. Verfahren nach einem der vorhergehenden Ansprüche, **dadurch gekennzeichnet, dass** ein Unterdruck in Schritt C) oder in Schritt D) in dem Folienbeutel nach vollständigem Verschließen erzeugt worden ist, wobei der Unterdruck zwischen 0,01 bar und 0,9 bar liegt, vorzugsweise zwischen 0,1 bar und 0,5 bar liegt.

7. Verfahren nach einem der vorhergehenden Ansprüche, **dadurch gekennzeichnet, dass** der Träger mit dem Gegenstand darauf zuerst derart in die Barrierefolie eingebracht wird, dass die Barrierefolie unterhalb des Trägers ist und an einer ersten Lateralseite durchgängig und ununterbrochen nach oben auf den Träger samt Gegenstand darauf überlappt, wobei an der gegenüberliegenden zweiten Lateralseite beide Folienlagen über den Träger und den Gegenstand darauf überstehen, wobei vorzugsweise danach an dieser zweiten Lateralseite die beiden Folienlagen miteinander verschweißt werden, insbesondere mit einem Abstand zu der zweiten Lateralseite, der weniger als 20% oder weniger als 10% des Abstands der beiden Lateralseiten zueinander beträgt.

8. Verfahren nach Anspruch 7, **dadurch gekennzeichnet, dass** das Verschweißen mindestens an der zweiten Lateralseite im Durchlauf erfolgt, wobei insbesondere das Verschweißen erfolgt mittels einer Seitenschweißeinrichtung mit zwei beheizten Räderpaaren, die in Durchlaufrichtung der Gegenstände hintereinander angeordnet sind, wobei bei jedem der Räderpaare zwei Räder gegeneinandergedrückt sind und zwischen sich zwei aufeinanderliegende Lagen der Barrierefolie transportieren und miteinander verbinden bzw. verschließen durch Verschweißen, um den Folienbeutel zu bilden.

9. Verfahren nach Anspruch 7 oder 8, **dadurch gekennzeichnet, dass** beim Verpacken in die Barrierefolie der Träger mit dem Gegenstand darauf entlang einer Transportrichtung bewegt wird, wobei die beiden Folienlagen in einer quer zu dieser Transportrichtung verlaufenden Querrichtung miteinander verbunden sind durch Verschweißen, insbesondere an einer Vorderseite des Trägers in Transportrichtung gesehen, wobei vorzugsweise der Folienbeutel endgültig verschlossen wird durch Verschweißen der beiden Folienlagen miteinander an einer der Vorderseite gegenüber liegenden Rückseite.

10. Verfahren nach einem der vorhergehenden Ansprüche, **dadurch gekennzeichnet, dass** in dem Inneren des Folienbeutels normale Luft bzw. kein Schutzgas enthalten ist, vorzugsweise mit dem Unterdruck nach Anspruch 5 oder 6.

11. Verfahren nach einem der Ansprüche 1 bis 9, **dadurch gekennzeichnet, dass** in dem Inneren des Folienbeutels Schutzgas enthalten ist, vorzugsweise mit dem Unterdruck nach Anspruch 5 oder 6.

12. Verfahren nach einem der vorhergehenden Ansprüche, **dadurch gekennzeichnet, dass** ein Unterdruck nach Anspruch 5 oder 6 in dem Folienbeutel erzeugt wird, indem eine längliche, eigenstabile Rohrleitung in den noch nicht vollständig verschlossenen Folienbeutel eingebracht wird und dann durch die Rohrleitung Luft aus dem Folienbeutel abgesaugt wird, wobei insbesondere die Luft abgesaugt wird, während der Folienbeutel im Schritt C) verschlossen wird, wobei vorzugsweise die Rohrleitung aus dem teilweise verschlossenen Folienbeutel herausgezogen wird vor dem vollständigen Verschließen des Folienbeutels.

13. Verfahren nach einem der vorhergehenden Ansprüche, **dadurch gekennzeichnet, dass** ein Unterdruck im Schritt C) in dem Folienbeutel erzeugt wird nach Anspruch 5 oder 6, indem in einem seitlich verschlossenen Folienschlauch ein Unterdruck erzeugt, in dem mehrere Gegenstände hintereinander aufgereiht sind, wobei ein quer zur Längsrichtung verlaufender und vorzugsweise mitlaufender Schweißstempel jeweils der erste Gegenstand in dem Folienschlauch außerhalb einer den Unterdruck erzeugenden Einheit verschließt und abtrennt, wobei insbesondere ein Absaugrohr zum Erzeugen des Unterdrucks unbewegbar bzw. statisch in dem Folienschlauch steht.

14. Verfahren nach einem der Ansprüche 1 bis 12, **dadurch gekennzeichnet, dass** alternativ zu Schritt C) oder D) Gas und/oder Luft aus dem Folienbeutel vor dem vollständigen Verschließen des Folienbeutels ausgedrückt werden, vorzugsweise indem Druck von einer Seite, insbesondere von oben, auf den Folienbeutel flächig und nachgiebig oder flexibel aufgebracht wird, vorzugsweise mit einer weich-elastischen Platte oder mit Druckluft.

15. Verwendung einer Barrierefolie zum Verpacken eines Gegenstands auf einem Träger mit einem Verfahren nach einem der vorhergehenden Ansprüche, wobei vorzugsweise die Barrierefolie eine Dicke zwischen 10 µm und 100 µm aufweist, vorzugsweise zwischen 10 µm und 50 µm oder zwischen 20 µm und 30 µm aufweist, und insbesondere eine mehrlagige Folie ist.

16. Vorrichtung zur Durchführung des Verfahrens nach einem der Ansprüche 1 bis 14, **dadurch gekennzeichnet, dass** sie für ein Verschweißen der Barrierefolie an den Lateralseiten der Gegenstände eine Seitenschweißeinrichtung mit zwei Räderpaaren aufweist, wobei die Räderpaare in Durchlaufrichtung der Gegenstände hintereinander angeordnet sind, wobei bei jedem der Räderpaare zwei Räder gegeneinandergedrückt sind und zwischen sich zwei aufeinanderliegende Lagen der Barrierefolie bewegen und miteinander verbinden bzw. verschließen durch Verschweißen, um den Folienbeutel zu bilden, wobei mindestens eines der Räder eines Räderpaares beheizt ist.
